# EUROPEAN PATENT APPLICATION

(11) **EP 4 701 068 A1**
(43) Date of publication of application: **25.02.2026**
(21) Application number: 25195288.3
(22) Date of filing: 12.08.2025
(51) Int. Cl.: H02P 6/04, H02P 6/06, H02P 6/08, H02P 25/03, H02P 27/08

(54) **MOTOR DRIVING DEVICE AND MOTOR DRIVING METHOD**

(30) Priority: 12.08.2024 KR 20240107716
(71) Applicant: LX Semicon Co., Ltd., Daejeon 34027 (KR)
(72) Inventor: MIN, Chol, 34027 Daejeon (KR); CHOI, Jong Tae, 34027 Daejeon (KR); HA, Jae Hyun, 34027 Daejeon (KR)
(74) Representative: Ter Meer Steinmeister & Partner

(57) **Abstract**

An embodiment provides a motor driving device including an inverter configured to generate a pulse width modulation (PWM) signal for controlling driving of a brushless direct current (BLDC) motor and supply the driving voltage to the BLDC motor; a sensor configured to sense a phase voltage and a phase current of the BLDC motor; and a controller configured to receive a target speed of the BLDC motor as an input and generate the PWM signal, calculate a zero cross delay value of the phase current with respect to a phase of the phase voltage using the phase of the phase voltage and a zero cross point of the phase current sensed by the sensor, and determine a load amount to be applied to the BLDC motor using the zero cross delay value and a duty ratio of the PWM signal.

## Description

This application claims priority to and the benefit of Korean Patent Application No. 10-2024-0107716, filed on August 12, 2024, the disclosure of which is incorporated herein by reference in its entirety.

### BACKGROUND

### Field

An embodiment relates to a motor driving device and a motor driving method.

### Discussion of Related Art

Recently, in an electronic apparatus including an appliance such as a washing machine or a drying machine, a brushless direct current (BLDC) motor that does not use a brush for rectification to have high energy efficiency is used.

A general method for controlling such a BLDC motor is a feedback control method for performing control such that an output value that is output when the motor is actually driven follows a command value that is input to control motor driving.

According to the feedback control method as described above, since the output value is caused to follow the command value by merely changing the torque, speed, or the like of the motor in a state in which a load to be applied to the motor is not known, the accuracy of BLDC motor control may be deteriorated.

### SUMMARY

From such a background, an embodiment is directed to a technique for accurately determining a load to be applied to a BLDC motor using a duty ratio of a control signal for controlling the BLDC motor, and a phase of a phase voltage and a zero cross point of a phase current of the BLDC motor.

The problems addressed by the embodiments of the present specification are not limited to those described above, and other problems not described will be clearly understood by those skilled in the art from the following description.

The object is solved by the features of the independent claims. Preferred embodiments are given in the dependent claims.

An embodiment provides a motor driving device including: an inverter configured to generate a driving voltage according to a pulse width modulation (PWM) signal for controlling driving of a brushless direct current (BLDC) motor and supply the driving voltage to the BLDC motor; a sensor configured to sense a phase voltage and a phase current of the BLDC motor; and a controller configured to receive a target speed of the BLDC motor as an input and generate the PWM signal, calculate a zero cross delay value of the phase current with respect to a phase of the phase voltage using the phase of the phase voltage and a zero cross point of the phase current sensed by the sensor, and determine a load amount to be applied to the BLDC motor using the zero cross delay value and a duty ratio of the PWM signal.

In another aspect, an embodiment provides a motor driving method for a motor driving device, the motor driving method including: receiving a target speed of a brushless direct current (BLDC) motor as an input and generating a pulse width modulation (PWM) signal; generating a driving voltage according to the PWM signal and supplying the driving voltage to the BLDC motor; sensing a phase voltage and a phase current of the BLDC motor; calculating a zero cross delay value of the phase current with respect to a phase of the phase voltage using the phase of the phase voltage and a zero cross point of the phase current at a point of time at which a real speed of the BLDC motor reaches the target speed; and determining a load amount to be applied to the BLDC motor using a duty ratio of the PWM signal and the zero cross delay value confirmed at a point of time at which the real speed of the BLDC motor reaches the target speed.

In one or more embodiments, the controller may be configured to determine the load amount using only the duty ratio when the duty ratio falls within a first duty ratio range of 0% to m% (where m is a natural number equal to or greater than one).

In one or more embodiments, the controller may be configured to determine the load amount using the duty ratio and the zero cross delay value when the duty ratio falls within a second duty ratio range of m% to 100%.

In one or more embodiments, the zero cross delay value may be maintained at 0° when the duty ratio increases within the first duty ratio range.

In one or more embodiments, the zero cross delay value may also increase when the duty ratio increases within the second duty ratio range.

In one or more embodiments, the zero cross delay value may increase one time or more when the duty ratio is 100%.

In one or more embodiments, the controller may be configured to calculate the zero cross delay value at a point of time at which a real speed of the BLDC motor reaches the target speed, and confirm the duty ratio.

In one or more embodiments, the motor driving method may further comprise, after the determining generating the driving voltage by applying a control parameter matching the load amount.

In one or more embodiments, in the determining, the motor driving device may determine the load amount using only the duty ratio when the duty ratio falls within a first duty ratio range of 0% to m% (where m is a natural number equal to or greater than one), and determines the load amount using the duty ratio and the zero cross delay value when the duty ratio falls within a second duty ratio range of m% to 100%.

As described above, according to the embodiment, since a load to be applied to the BLDC motor can be accurately determined using the duty ratio of the PWM signal for controlling the BLDC motor, and the phase of the phase voltage and the zero cross point of the phase current of the BLDC motor, driving of the motor can be controlled more accurately.

Since a load of an application can be determined, the load can be utilized to execute an application function for user's convenience such as application completion time prediction. Further, by utilizing load measurement data, functions for user's convenience such as application operation completion time measurement, application weight measurement, and automatic transfer between execution sequences can be implemented in various ways.

Various and beneficial advantages and effects of the present disclosure are not limited to the above, and may be more easily understood in the course of describing specific embodiments of the present disclosure.

### BRIEF DESCRIPTION OF THE DRAWINGS

The above and other objects, features, and advantages of the present disclosure will become more apparent to those of ordinary skill in the art by describing exemplary embodiments thereof in detail with reference to the attached drawings, in which:
FIG. 1 is a configuration diagram of a motor driving device according to an embodiment;
FIG. 2 is a diagram illustrating a circuit configuration of the motor driving device according to the embodiment;
FIG. 3 is a configuration diagram specifically illustrating a configuration of the motor driving device according to the embodiment;
FIGS. 4 and 5 are diagrams illustrating a zero cross delay value of a phase current with respect to a phase of a phase voltage;
FIG. 6 is a diagram illustrating a look-up table according to the embodiment;
FIG. 7 is a diagram graphically illustrating the look-up table according to the embodiment;
FIG. 8 is a flowchart illustrating a process of storing the look-up table in the motor driving device according to the embodiment; and
FIG. 9 is a flowchart illustrating a process of determining a load amount in the motor driving device according to the embodiment.

### DETAILED DESCRIPTION OF EXEMPLARY EMBODIMENTS

Hereinafter, exemplary embodiments of the present invention will be described in detail with reference to the accompanying drawings. It should be noted that, when components in the drawings are designated by reference numbers, the same components have the same reference numbers as far as possible even when the components are illustrated in different drawings. Further, in the description of the present invention, detailed description of well-known configurations or functions will be omitted when the detailed description is deemed to unnecessarily obscure the subject matter of the present invention.

Also, in the description of the components of the present invention, terms such as first, second, A, B, (a), and (b) may be used. Each of the terms should be understood as merely distinguishing the corresponding component from other components, and should not be understood as delimiting an essence, an order or a sequence of the corresponding component. It should be understood that, when one component is "connected", "coupled", or "joined" to another component, one component may be directly connected or joined to another component or may be "connected", "coupled", or "joined" to another component with a third component interposed therebetween.

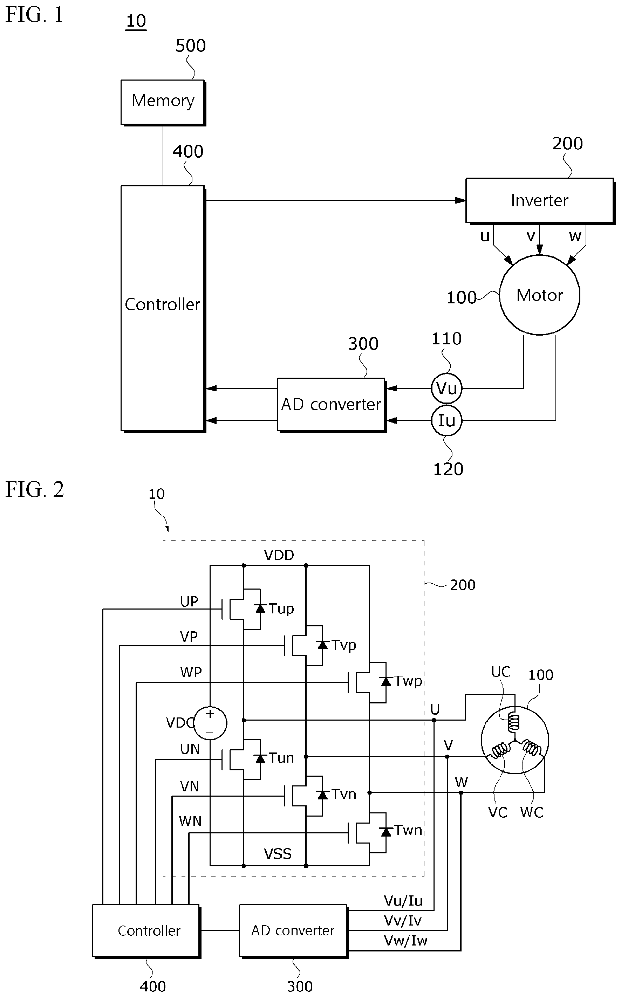

FIG. 1 is a configuration diagram of a motor driving device according to an embodiment. FIG. 2 is a diagram illustrating a circuit configuration of the motor driving device according to the embodiment.

Referring to FIG. 1, a motor driving device 10 may include driving circuit blocks 200, 300, 400, and 500 for driving a brushless direct current (BLDC) motor 100. As an example, the motor driving device 10 may drive a sensor-less BLDC motor 100.

The motor driving device 10 may include an inverter 200 that transmits a driving voltage to the BLDC motor 100, a voltage sensor 110 that senses a phase voltage Vu output from the BLDC motor 100, a current sensor 120 that senses a phase current Iu output from the BLDC motor 100, and a controller 400 that controls the inverter 200 to drive the BLDC motor 100.

In the embodiment, for convenience of description, an example where the voltage sensor 110 senses a U-phase phase voltage, and the current sensor 120 senses a U-phase phase current will be described, the embodiment is not limited thereto, and the voltage sensor 110 and the current sensor 120 may sense V-phase or W-phase phase voltage and phase current, respectively. The voltage sensor 110 and the current sensor 120 may be simply expressed as sensors 110 and 120.

A memory 500 may be connected to the controller 400. The memory 500 may be provided outside the controller 400. The memory 500 may be embedded in a semiconductor chip such as a micro controller unit (MCU) or a motor driver IC along with the controller 400. In other words, the motor driving device 10 may be an MCU or a motor driver IC.

The memory 500 may be implemented by an electrically erasable and programmable read only memory (EEPROM).

In the embodiment, as in FIG. 2, the BLDC motor 100 may include a stator including three-phase coils UC, VC, and WC having different phases and a rotor using a permanent magnet.

The stator of the BLDC motor 100 may include a first coil UC having a U phase, a second coil VC having a V phase, and a third coil WC having a W phase. The BLDC motor 100 may be driven according to the driving voltage supplied from the inverter 200 to each of the three-phase coils UC, VC, and WC. In this case, magnetic force generated in the first to third coils UC, VC, and WC may rotate the rotor of the BLDC motor 100.

The inverter 200 generates the driving voltage according to a PWM signal for controlling driving of the BLDC motor 100 and supplies the driving voltage to the BLDC motor 100.

Specifically, the inverter 200 may supply a first driving voltage VDD or a second driving voltage VSS to each of the three-phase coils UC, VC, and WC of the BLDC motor 100 via each of first to third phases U, V, and W under the control of the controller 400. The inverter 200 may bring the coil in a floating state without supplying the first and second driving voltages VDD and VSS.

The inverter 200 receives the first driving voltage VDD and the second driving voltage VSS from a power supply VDC. The inverter 200 may receive first-first and first-second pulse width modulation (PWM) signals UP and UN, second-first and second-second PWM signals VP and VN, and third-first and third-second PWM signals WP and WN from the controller 400.

The inverter 200 may include a first pull-up transistor Tup and a first pull-down transistor Tun connected in series between supply lines of the first driving voltage VDD and the second driving voltage VSS for driving the first coil UC of the BLDC motor 100.

The inverter 200 may include a second pull-up transistor Tvp and a second pull-down transistor Tvn connected in series between supply lines of the first driving voltage VDD and the second driving voltage VSS for driving the second coil VC of the BLDC motor 100.

The inverter 200 may include a third pull-up transistor Twp and a third pull-down transistor Twn connected in series between supply lines of the first driving voltage VDD and the second driving voltage VSS for driving the third coil WC of the BLDC motor 100.

The controller 400 may sense a phase voltage and a phase current of the BLDC motor 100 using the sensors 110 and 120. In this case, the phase voltage and the phase current (for example, Vu/Iu) sensed by the sensors 110 and 120 may be converted into digital signals through AD converter 300 and may be input to the controller 400.

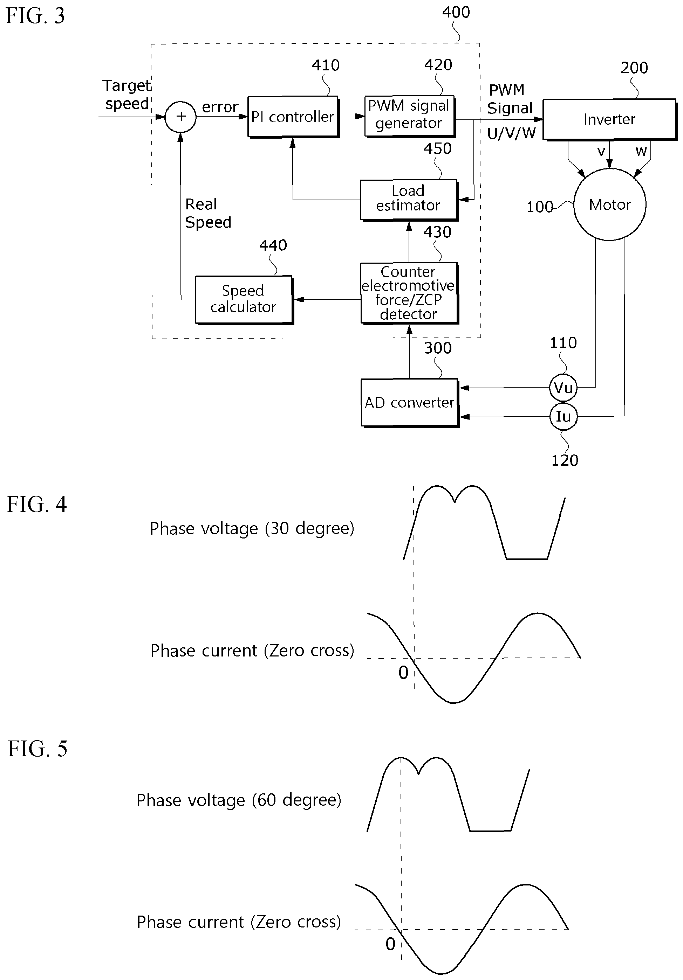

When a user drives an electronic device in which the BLDC motor 100 is mounted, for example, an appliance, the controller 400 may generate a PWM signal according to a target speed (in FIG. 3, Target speed) set by a user's command.

In other words, when the user sets a driving stage (operation level) of the electronic device or the driving state is automatically set at a high-order control stage and the electronic device is operated, the controller 400 may generate a PWM signal according to a target speed corresponding to the operation level. The controller 400 may transmit the PWM signal to the inverter 200. Here, the appliance may be a washing machine, a drying machine, or the like including the BLDC motor 100.

In the embodiment, the controller 400 may calculate a zero cross delay value of the phase current with respect to a phase of the phase voltage using the phase of the phase voltage and a zero cross point of the phase current sensed by the sensors 110 and 120. Here, the controller 400 may calculate the zero cross delay value using the phase of the phase voltage and the zero cross point of the phase current when a real speed of the BLDC motor 100 reaches the target speed.

The controller 400 may determine a load amount to be applied to the BLDC motor 100 using the zero cross delay value and a duty ratio of the PWM signal.

The controller 400 may include a configuration as in FIG. 3.

Referring to FIG. 3, the controller 400 may include a proportional-integral (PI) controller 410, a PWM signal generator 420, a counter electromotive force/zero cross point (ZCP) detector 430, a speed calculator 440, and a load estimator 450.

The PI controller 410 may confirm a difference (error) between the target speed Target speed and a real speed Real speed, and may generate a motor speed adjustment value for adjusting a motor speed such that the target speed and the real speed are equal to each other.

The PI controller 410 may generate a lead angle adjustment value for making a phase of the counter electromotive force detected by the counter electromotive force/ZCP detector 430 described below equal to a phase of the phase current.

The PI controller 410 may generate a PI control value including the motor speed adjustment value and the lead angle adjustment value and may transmit the PI control value to the PWM signal generator 420.

The PWM signal generator 420 may set a PWM duty ratio according to the PI control value and may generate a PWM signal having the PWM duty ratio.

The counter electromotive force/ZCP detector 430 may detect the counter electromotive force of a specific coil generated in the BLDC motor 100.

The counter electromotive force/ZCP detector 430 may detect the zero cross point of the phase current. Here, the zero cross point may mean a point of time at which a phase current of a specific coil is zero as in FIG. 4 or 5. The counter electromotive force may be detected at the zero cross point of the phase current in a state in which the specific coil is brought into a floating state.

In the embodiment, the counter electromotive force/ZCP detector 430 may transmit the zero cross point of the phase current to the load estimator 450, and may transmit the counter electromotive force to the speed calculator 440.

The counter electromotive force/ZCP detector 430 receives the phase voltage transmitted from the AD converter 300 and may transmit the phase voltage to the load estimator 450.

The speed calculator 440 may calculate the real speed of the BLDC motor 100 using the counter electromotive force. Here, the counter electromotive force and the real speed of the BLDC motor 100 may be in a proportional relationship.

The load estimator 450 may receive the phase voltage transmitted from the counter electromotive force/ZCP detector 430. The load estimator 450 may also receive the zero cross point of the phase current.

The load estimator 450 may confirm the duty ratio of the PWM signal generated by the PWM signal generator 420.

With this, the load estimator 450 may calculate the zero cross delay value with respect to the phase of the phase voltage using the phase of the phase voltage and the zero cross point of the phase current. Here, the load estimator 450 may calculate the zero cross delay value of the phase current using the phase of the phase voltage and the zero cross point of the phase current when the real speed of the BLDC motor 100 reaches the target speed.

Specifically, the load estimator 450 may calculate the zero cross delay value by counting from a point of time at which the phase of the phase voltage is 30°, to the zero cross point of the phase current in a state in which the real speed of the BLDC motor 100 reaches the target speed.

For example, as in FIG. 4, when the point of time at which the phase of the phase voltage is 30° and the zero cross point of the phase current are the same, the load estimator 450 may calculate the zero cross delay value to be 0°. Here, the phase of 30° of the phase voltage may be a reference phase of the phase voltage.

As in FIG. 5, when a point of time at which the phase of the phase voltage is 60° and the zero cross point of the phase current are the same, the load estimator 450 may calculate the zero cross delay value to be 30° (60° - reference phase).

On the other hand, the load estimator 450 may also confirm the duty ratio of the PWM signal generated by the PWM signal generator 420.

With this, the load estimator 450 may determine the load amount to be applied to the BLDC motor 100 using the zero cross delay value of the phase current and the duty ratio of the PWM signal.

Here, as the load amount to be applied to the BLDC motor 100 increases, the duty ratio of the PWM signal proportional to the magnitude of the driving voltage also increases. As the load amount to be applied to the BLDC motor 100 increases, the zero cross delay value of the phase current also increases.

Accordingly, the load estimator 450 may determine the load amount to be applied to the BLDC motor 100 using one or more of the duty ratio of the PWM signal and the zero cross delay value of the phase current proportional to the load amount.

Here, the load estimator 450 may determine a load amount corresponding to one or more of the duty ratio of the PWM signal and the zero cross delay value of the phase current in a look-up table stored in the memory 500 as the load amount to be applied to the BLDC motor 100.

In the embodiment, the look-up table may include multiple load amounts (Load) and duty ratios (Duty) of a PWM signal and zero cross delay values (Zero Cross Delay) of a phase current corresponding to the multiple load amounts on an one-to-one basis.

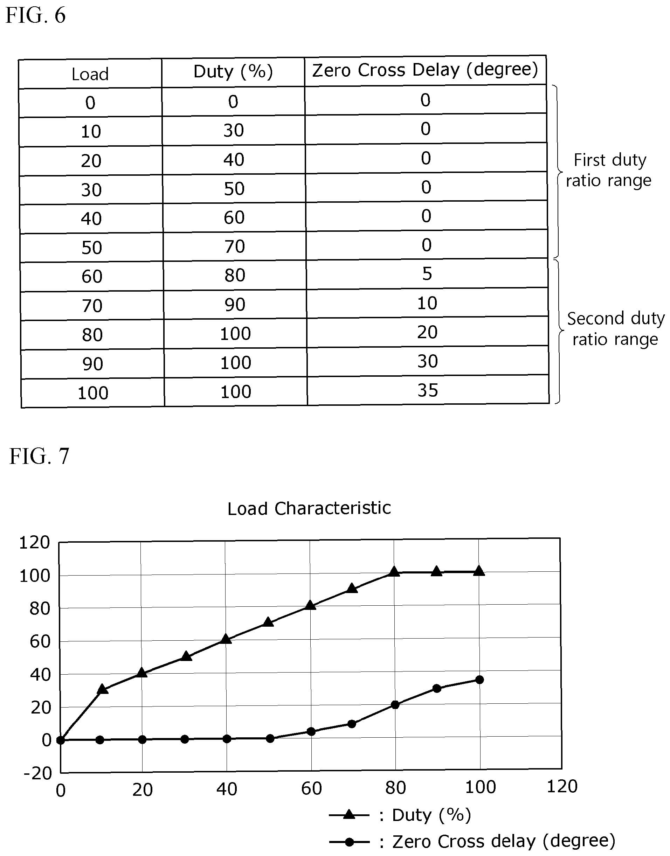

In FIGS. 6 and 7, it can be understood that the zero cross delay value is 0° in a first duty ratio range of the look-up table.

In other words, in the first duty ratio range, when the duty ratio of the PWM signal increases, the zero cross delay value of the phase current may be maintained to 0°.

In a second duty ratio range, as in FIGS. 6 and 7, the zero cross delay value may also increase when the duty ratio of the PWM signal increases.

Here, the first duty ratio range may be equal to or greater than 0% and smaller than m% (where m is a natural number equal to or greater than one), and the second duty ratio range may be equal to or greater than m% and equal to or smaller than 100%.

For example, in FIG. 6, the first duty ratio range may be equal to or greater than 0% and smaller than 70%, and the second duty ratio range may be equal to or greater than 70% and equal to or smaller than 100%.

As described above, the zero cross delay value of the phase current is maintained to 0° in the first duty ratio range. For this reason, when the duty ratio of the PWM signal generated by the PWM signal generator 420 falls within the first duty ratio range, the load estimator 450 may determine the load amount to be applied to the BLDC motor 100 using only the duty ratio of the PWM signal without using the zero cross delay value of the phase current.

In other words, when the duty ratio of the PWM signal falls within the first duty ratio range, the controller 400 may determine the load amount to be applied to the BLDC motor 100 using only the duty ratio of the PWM signal without using the zero cross delay value of the phase current.

For example, when the duty ratio of the PWM signal is 50%, the zero cross delay value of the phase current may be calculated to be 0°. Accordingly, the load estimator 450 may determine the load amount to be applied to the BLDC motor 100 to be 50 using only the duty ratio of the PWM signal.

When the duty ratio of the PWM signal has a value between 50% and 60%, the load estimator 450 may determine the load amount to be applied to the BLDC motor 100 through an interpolation method.

On the other hand, in the second duty ratio range, when the duty ratio of the PWM signal increases, the zero cross delay value also increases. For this reason, when the duty ratio of the PWM signal generated by the PWM signal generator 420 falls within the second duty ratio range, the load estimator 450 may determine the load amount to be applied to the BLDC motor 100 using the zero cross delay value of the phase current and the duty ratio of the PWM signal.

In other words, when the duty ratio of the PWM signal falls within the second duty ratio range, the controller 400 may determine the load amount to be applied to the BLDC motor 100 using the zero cross delay value of the phase current and the duty ratio of the PWM signal.

For example, when the duty ratio of the PWM signal is 90%, the zero cross delay value of the phase current may be calculated to be 10°. Accordingly, load estimator 450 may determine the load amount to be applied to the BLDC motor 100 to be 70 using the zero cross delay value of the phase current and the duty ratio of the PWM signal.

When the duty ratio of the PWM signal has a value between 90% and 100%, and the zero cross delay value of the phase current has a value between 10° and 20°, the load estimator 450 may determine the load amount to be applied to the BLDC motor 100 through an interpolation method.

In the embodiment, when the duty ratio of the PWM signal is 100%, that is, when the duty ratio of the PWM signal is a maximum, the zero cross delay value of the phase current may increase one time or more.

For example, as in FIGS. 6 and 7, when the duty ratio of the PWM signal is 100% in the look-up table, the zero cross delay value may increase from 20° to 30° first time, and then, may increase to 35° second time.

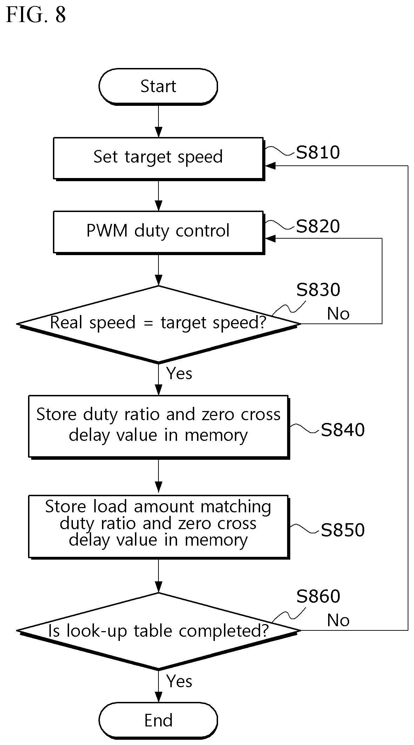

On the other hand, in the embodiment, the look-up table may be stored in the memory 500 through a process as in FIG. 8.

FIG. 8 is a flowchart illustrating a process of storing the look-up table in the motor driving device according to the embodiment.

First, the motor driving device 10 receives the target speed of the brushless direct current (BLDC) motor as an input, and controls the speed of the BLDC motor 100 with the PWM signal having the PWM duty ratio according to the target speed (S810, S820).

The motor driving device 10 may calculate the real speed of the BLDC motor 100 and may compare the real speed with the target speed, and may control the speed of the BLDC motor 100 until the real speed reaches the target speed (S830).

The motor driving device 10 may confirm the duty ratio of the PWM signal at a point of time at which the real speed reaches the target speed in Step S830 described above, and may calculate the zero cross delay value of the phase current and store the zero cross delay value in the memory 500 (S840).

The motor driving device 10 may store, in the memory 500, a load amount matching the duty ratio and the zero cross delay value stored in the memory 500 (S850).

The motor driving device 10 may repeatedly execute Steps S810 to S850 described above until the look-up table is completed (S860).

In other words, Steps S810 to S850 described above may be repeatedly executed until the duty ratio becomes from 0% to 100%.

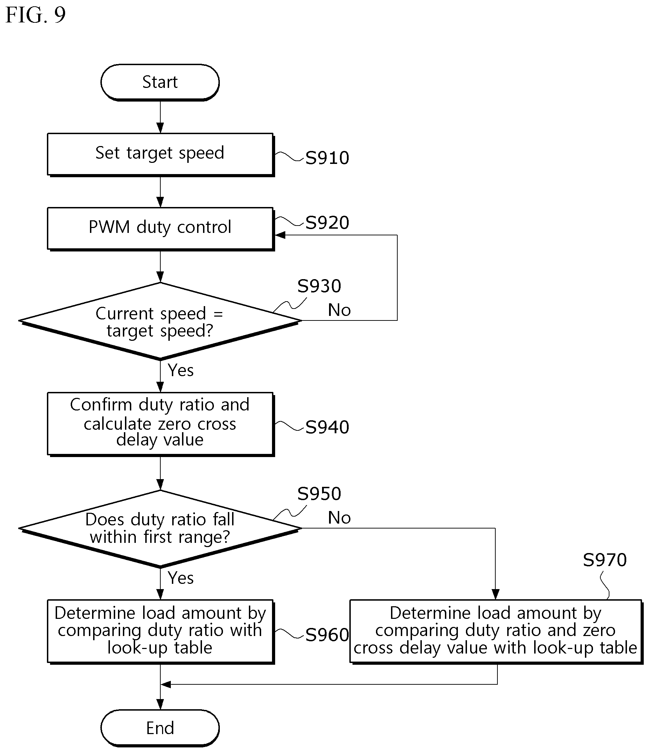

As described above, the motor driving device 10 that stores the look-up table in the memory 500 may determine the load amount through a process as in FIG. 9.

FIG. 9 is a flowchart illustrating a process of determining a load amount in the motor driving device according to the embodiment.

First, the motor driving device 10 inputs the target speed of the brushless direct current (BLDC) motor, generates the PWM signal having the PWM duty ratio according to the target speed, and controls the speed of the BLDC motor 100 (S910, S920).

In other words, in Step S920 described above, the motor driving device 10 generates the driving voltage according to the PWM signal and supplies the driving voltage to the BLDC motor.

After Step S920 described above, the motor driving device 10 may sense the phase voltage and the phase current of the BLDC motor.

On the other hand, at the point of time at which the real speed of the BLDC motor 100 reaches the target speed, the motor driving device 10 may calculate the zero cross delay value of the phase current with respect to the phase of the phase voltage using the phase of the phase voltage and the zero cross point of the phase current, and may confirm the duty ratio of the PWM signal (S930, S940).

Subsequently, the motor driving device 10 may determine the load amount to be applied to the BLDC motor 100 using the duty ratio of the PWM signal and the zero cross delay value confirmed at the point of time at which the real speed of the BLDC motor 100 reaches the target speed.

Specifically, when the duty ratio of the PWM signal falls within the first duty ratio range of 0% to m% (where m is a natural number equal to or greater than one), the motor driving device 10 may determine the load amount using only the duty ratio of the PWM signal (S960). In other words, the motor driving device 10 may determine the load amount by comparing the duty ratio of the PWM signal with the look-up table.

When the duty ratio of the PWM signal falls within the second duty ratio range of m% to 100%, the motor driving device 10 may determine the load amount using the duty ratio of the PWM signal and the zero cross delay value (S970). In other words, the motor driving device 10 may determine the load amount by comparing the duty ratio of the PWM signal and the zero cross delay value with the look-up table.

After determining the load amount to be applied to the BLDC motor 100 in the above-described manner, the motor driving device 10 may generate a driving voltage by applying a control parameter matching the load amount. Here, the control parameter matching the load amount may be stored in the memory 500.

## Claims

1. A motor driving device comprising:
an inverter (200) configured to generate a driving voltage according to a pulse width modulation (PWM) signal for controlling driving of a brushless direct current (BLDC) motor (100) and supply the driving voltage to the BLDC motor (100);
a sensor (110) configured to sense a phase voltage and a phase current of the BLDC motor (100); and
a controller (400) configured to receive a target speed of the BLDC motor (100) as an input and generate the PWM signal, calculate a zero cross delay value of the phase current with respect to a phase of the phase voltage using the phase of the phase voltage and a zero cross point of the phase current sensed by the sensor (110), and determine a load amount to be applied to the BLDC motor (100) using the zero cross delay value and a duty ratio of the PWM signal.

2. The motor driving device according to claim 1, wherein the controller (400) is configured to determine the load amount using only the duty ratio when the duty ratio falls within a first duty ratio range of 0% to m% (where m is a natural number equal to or greater than one).

3. The motor driving device according to claim 1 or 2, wherein the controller (400) is configured to determine the load amount using the duty ratio and the zero cross delay value when the duty ratio falls within a second duty ratio range of m% to 100%.

4. The motor driving device according to any one of the preceding claims, wherein the zero cross delay value is maintained at 0° when the duty ratio increases within the first duty ratio range.

5. The motor driving device according to any one of the preceding claims, wherein the zero cross delay value also increases when the duty ratio increases within the second duty ratio range.

6. The motor driving device according to any one of the preceding claims, wherein the zero cross delay value increases one time or more when the duty ratio is 100%.

7. The motor driving device according to any one of the preceding claims, wherein the controller (400) is configured to calculate the zero cross delay value at a point of time at which a real speed of the BLDC motor (100) reaches the target speed, and confirm the duty ratio.

8. A motor driving method, the motor driving method comprising:
receiving a target speed of a brushless direct current (BLDC) motor (100) as an input and generating a pulse width modulation (PWM) signal;
generating a driving voltage according to the PWM signal and supplying the driving voltage to the BLDC motor (100);
sensing a phase voltage and a phase current of the BLDC motor (100);
calculating a zero cross delay value of the phase current with respect to a phase of the phase voltage using the phase of the phase voltage and a zero cross point of the phase current at a point of time at which a real speed of the BLDC motor reaches the target speed; and
determining a load amount to be applied to the BLDC motor (100) using a duty ratio of the PWM signal and the zero cross delay value confirmed at a point of time at which the real speed of the BLDC motor reaches the target speed.

9. The motor driving method according to claim 8, further comprising, after the determining:
generating the driving voltage by applying a control parameter matching the load amount.

10. The motor driving method according to claim 8 or 9, wherein, in the determining, the motor driving device determines the load amount using only the duty ratio when the duty ratio falls within a first duty ratio range of 0% to m% (where m is a natural number equal to or greater than one), and determines the load amount using the duty ratio and the zero cross delay value when the duty ratio falls within a second duty ratio range of m% to 100%.
